# EUROPÄISCHE PATENTSCHRIFT

(11) **EP 1 197 134 B1**
(45) Veröffentlichungstag und Bekanntmachung des Hinweises auf die Patenterteilung: **01.12.2004**
(21) Anmeldenummer: 01123524.9
(22) Anmeldetag: 29.09.2001
(51) Int. Cl.: A01D 41/12

(54) **Vorrichtung zur Erhöhung des Fassungsvermögens eines Behälters**
Device for increasing the capacity of a container
Dispositif d'augmentation de la capacité d'un conteneur

(30) Priorität: 14.10.2000 DE 10051096
(43) Veröffentlichungstag der Anmeldung: 17.04.2002
(73) Patentinhaber: DEERE & COMPANY, Moline, Illinois 61265-8098 (US)
(72) Erfinder: Dauenhauer, Bruno, 66509 Rieschweiler (DE); Kerscher, Martin, 84164 Moosthenning (DE); Wendling, Ignatz, 66482 Zweibrücken (DE)
(74) Vertreter: Holst, Sönke, Dr.

(56) Entgegenhaltungen:
- EP-A- 0 458 032
- BE-A- 742 766
- DE-A- 4 320 565
- DE-A- 4 445 933
- DE-U- 1 966 426
- US-A- 4 106 649
- US-A- 4 466 549
- US-A- 5 427 572

## Beschreibung

Die Erfindung betrifft eine Vorrichtung zur Erhöhung des Fassungsvermögens eines Behälters, mit vier Wänden, die zwischen einer Betriebsstellung, in der sie einen geschlossenen Ring bilden, und einer Außerbetriebsstellung bewegbar sind, wobei zwei sich gegenüberliegende Wände schwenkbar sind und aus in sich starrem Material bestehen.

Korntanks von Mähdreschern sind häufig mit Korntankaufsätzen versehen, die zwischen einer Außerbetriebsstellung und einer Betriebsstellung bewegbar sind. In der Außerbetriebsstellung sind bewegliche Wände des Korntankaufsatzes eingeklappt oder eingezogen, so dass das Volumen des Korntanks raumsparend verkleinert ist. In der Betriebsstellung ist der Korntankaufsatz ausgeklappt oder -gezogen und vergrößert das Fassungsvolumen des Korntanks. Im Stand der Technik sind verschiedene Möglichkeiten bekannt, Korntankaufsätze zwischen Betriebs- und Außerbetriebsstellung zu bewegen.

Die DE 44 45 933 A schlägt vor, als Seitenwände des Korntankaufsatzes zwei durch Scharniere miteinander verbundene, aus in sich starren Blechen bestehende Segmente, die klappbar am Korntank angelenkt sind, zu verwenden und mit trapezförmigen Vorder- und Rückwänden zu kombinieren, welche ebenfalls aus in sich starren Blechen aufgebaut und klappbar am Korntank angelenkt sind. Zwischen der Vorder- bzw. Rückwand und den Seitenwänden sind in den Ecken vier dreieckige Einfaltdreiecke aus in sich starren Blechen angeordnet, so dass ein rechteckiger, umlaufender Korntankaufsatz entsteht. Die Seitenwände werden durch Hydraulikzylinder zwischen der Betriebsstellung, in der sie angehoben sind, und der Außerbetriebsstellung, in der sie abgesenkt sind, bewegt. Über die Einfaltdreiecke werden die Vorder- und Rückwand mitbewegt. Als nachteilig ist die relativ hohe Anzahl der Elemente der Wände anzusehen, die den Korntankaufsatz verteuert.

In der DE 1 951 498 A ist ein Korntank für einen Mähdrescher beschrieben, der nach außen ausklappbare Seitenwände zur Vergrößerung des Korntankvolumens aufweist. Die Seitenwände sind am vorderen und hinteren Ende durch elastisches Material mit der starren Vorder- bzw. Rückwand des Korntanks verbunden. Als nachteilig ist die nur geringe erzielte Volumenvergrößerung anzusehen.

Die DE 43 20 565 A schlägt einen Mähdrescher mit einem Korntankaufsatz aus einem umlaufenden, flexiblen Flächenelement vor. Das Flächenelement wird durch einen Rahmen in die Betriebsstellung hinaufgezogen. Das Flächenelement kann insgesamt aus flexiblem Material oder aus starren Platten aufgebaut sein, die endseitig dichtend mit flexiblen Verbindungselementen miteinander verbunden sind. Als nachteilig ist hier anzusehen, dass zum Emporziehen des Flächenelements ein nicht verkantender und somit mit geringen Toleranzen zu fertigender Mechanismus vorzusehen ist.

Die der Erfindung zugrunde liegende Aufgabe wird darin gesehen, eine verbesserte Vorrichtung zur Vergrößerung des Volumens eines Behälters bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, eine Vorrichtung zur Erhöhung des Fassungsvermögens eines Behälters mit vier Wänden auszustatten, die ein geschlossenes Rechteck bilden. Zwei sich gegenüberliegende Wände sind aus in sich starrem Material gefertigt, beispielsweise aus Blech, das mit Verstärkungsrippen versehen sein kann. Die verbleibenden Wände sind aus in sich flexiblem Material hergestellt. Die Wände aus in sich starrem Material sind zwischen einer Außerbetriebsstellung, in der sie aufeinander zu und nach unten verschwenkt sind, und einer aufgerichteten Betriebsstellung verschwenkbar. Die Wände aus in sich flexiblem Material sind endseitig mit den Wänden aus starrem Material verbunden und verbinden letztere miteinander, so dass in der Betriebsstellung der Vorrichtung ein geschlossener Ring entsteht. Die Wände aus flexiblem Material richten sich mit der Wänden aus starrem Material in die Betriebsstellung auf und falten sich aufgrund ihrer Flexibilität zusammen, wenn die Wände aus starrem Material in die Außerbetriebsstellung geklappt werden.

Auf diese Weise erhält man eine relativ einfach aufgebaute Vorrichtung zur Erhöhung des Fassungsvermögens eines Behälters, die sich durch geringe Kosten, geringe Masse und eine gute Dichtigkeit an den Stoßstellen der Wände auszeichnet. Aufgrund der geringen Masse liegt der Schwerpunkt eines mit der Vorrichtung ausgestatteten Mähdreschers relativ niedrig.

In einer bevorzugten Ausgestaltung der Erfindung ist an der Außenfläche einer oder vorzugsweise beider Wände aus in sich flexiblem Material ein einklappbares Stützelement vorgesehen. Das Stützelement hat zwei Aufgaben. Zum einen stützt es die in sich flexible Wand ab, wenn das Innere der Vorrichtung zur Erhöhung des Fassungsvermögens eines Behälters mit Material gefüllt wird. Dadurch vermeidet man eine übermäßige Spannung in dem flexiblem Material, die zu Verschleißerscheinungen oder Beschädigungen (Reißen) führen kann. Zum anderen ist das Stützelement gemeinsam mit den Wänden aus in sich starrem Material einklappbar, so dass Wände aus in sich flexiblem Material raumsparend in den Außerbetriebszustand einfaltet. Das Stützelement wird vorzugsweise durch einen Rahmen gebildet, der aus Rohren gefertigt sein kann.

Zur zusätzlichen Abstützung eine oder beider der Wände aus in sich flexiblem Material kann ein an der Außenseite der Wand anliegendes Seil dienen. Das Seil kann zwischen einer oberen Ecke eine Wand aus starrem Material und dem unteren Rand der Wand aus flexiblem Material bzw. dem Stützelement gespannt sein. Die zweite Variante hat den Vorteil, dass das Seil das Einfalten der Wand aus flexiblem Material unterstützt. Das Seil kann auch das Ein- und Ausklappen des Stützelements bewirken, vorzugsweise mit Unterstützung der Kraft einer Feder. Die Länge des Seils ist vorzugsweise einstellbar, um es auf die zur richtigen Abstützung der Wand geeignete Länge bringen zu können. Dazu können am Seilende eingepresste Gewindestangen oder Spannanker dienen.

Prinzipiell wäre denkbar, die Wände aus der Außerbetriebsstellung, in der sie in der Regel etwa horizontal orientiert sind, um 90° oder weniger nach oben in die Betriebsstellung zu verschwenken. Ein demgegenüber wesentlich vergrößertes Volumen kann erreicht werden, wenn zwei der Wände trapezförmig sind, so dass die jeweils anderen Wände um einen 90° übersteigenden Winkel in die Betriebsstellung verschwenkt werden. Die Wände bilden in der Betriebsstellung einen rechteckförmigen Trichter, dessen Querschnittsfläche mit der Höhe ansteigt. Durch die große Querschnittsfläche liegt der Schwerpunkt einer gefüllten Vorrichtung zur Erhöhung des Fassungsvermögens des Behälters und die Gesamthöhe eines damit ausgestatteten Mähdreschers relativ niedrig. Es ist auch denkbar, alle vier Wände trapezförmig zu gestalten, so dass sie alle um mehr als 90° in die Betriebsstellung verschwenkbar sind.

Es ist vorteilhaft, den Verschwenkwinkel, um den die Wände aus in sich flexiblem Material und/oder die Wände aus in sich starrem Material verschwenkt werden können, zu begrenzen und die Wände somit abzustützen, um zu verhindern, dass sie sich bei übermäßiger Belastung verformen, bzw. die Materialstärke vermindern zu können. Dazu können Seile, Stangen oder Hebel dienen, welche die Wände am Behälter oder der den Behälter tragenden Maschine oder dgl. abstützen oder untereinander verbinden. Beispielsweise können gegenüberliegende Wände durch Seile verbunden werden.

Zum Verschwenken der Vorrichtung zwischen Betriebs- und Außerbetriebsstellung können ebenfalls Seile und/oder Hebel dienen, die die Wände aus in sich starrem Material und/oder das einklappbare Stützelement zwischen Außerbetriebsstellung und Betriebsstellung verschwenken. Die Seile und/oder Hebel können auch zur Begrenzung des Verschwenkwinkels der Wände aus starrem Material und/oder des Stützelements dienen.

In der Außerbetriebsstellung kann eine erste Wand aus in sich starrem Material einen Teilbereich der gegenüberliegenden Wand aus starrem Material überdecken. Somit erreicht man, dass der darunter liegende Behälter nach oben hin geschlossen ist, und keinem Regen oder anderen unerwünschten Umwelteinflüssen ausgesetzt ist. Bei einem Ausfall des Verstellmechanismus kann die obere Wand von Hand angehoben und in die Betriebsstellung verbracht werden.

Damit eine Bedienungsperson das Innere des Behälters erreichen kann, ist eine Anbringung von Trittstufen an der Innenseite einer der Wände aus in sich starrem Material vorgeschlagen.

Als in sich flexibles Material kommt jedes hinreichend feste flexible Material in Frage, beispielsweise gummiertes Gewebe, Kunststoff oder geeignete Vliesstoffe. Das Material muss nicht, kann aber auch elastisch ausdehnbar sein.

Die erfindungsgemäße Vorrichtung eignet sich insbesondere als Korntankaufsatz für einen Korntank eines Mähdreschers. Die Wände aus flexiblem Material können sich entlang der Fahrtrichtung erstrecken, obwohl auch eine um 90° gedrehte Anordnung denkbar wäre.

Die Bewegung der Vorrichtung zwischen Betriebsstellung und Außerbetriebsstellung kann mittels einer Antriebseinrichtung erfolgen, die auch das zwischen einer Betriebsstellung und Außerbetriebsstellung bewegbare Befüllrohr des Korntanks bewegt. Die Antriebseinrichtung bewegt die Vorrichtung direkt oder indirekt über geeignete Antriebsmittel, wie die oben erwähnten Seilzug- oder Hebelmechanismen.

Beim Ein- und Ausfahren der erfindungsgemäßen Vorrichtung ist eine bestimmte Reihenfolge, nach der die Wände aufgeklappt und eingefaltet werden, vorteilhaft. Beispielsweise kann erst eine erste Wand aus in sich starrem Material ausgeklappt werden, kurz danach, noch während des Ausfaltens der ersten Wand die Wände aus in sich flexiblem Material und schließlich kann - auch noch während des Ausfaltens der drei genannten Wände - die zweite Wand aus in sich starrem Material. Eine derartige Reihenfolge ist insbesondere dann sinnvoll, wenn die erste Wand aus in sich starrem Material im eingeklappten Zustand die drei anderen Wände teilweise überdeckt. Um diese Reihenfolge zu erzielen, wäre die Verwendung mehrerer, entsprechend gesteuerter Antriebe denkbar. Aus Kostengründen bietet es sich aber an, nur einen einzigen Antrieb zu verwenden, der durch einen geeigneten Antriebsmechanismus die vier Wände in der gewünschten, z. B. der oben beschriebenen zeitlichen Reihenfolge ausklappt. Dieser Antriebsmechanismus kann mit einem oder mehreren sich bewegenden Antriebselementen versehen sein, die mit den Wänden durch Langloch-Zapfen-Verbindungen gekoppelt sind, um die gewünschte zeitliche Reihenfolge der Bewegungen zu realisieren. Dabei können Federkraftspeicher die Bewegung der Wände im Anfangs- und/oder Endbereich der Klappbewegung unterstützen.

Schließlich ist vorgeschlagen, den Korntank des Mähdreschers unterhalb des Korntankaufsatzes mit einem Fenster zu versehen, durch das eine in der Kabine des Mähdreschers befindliche Bedienungsperson in den Korntank blicken kann. Die erfindungsgemäße Vorrichtung erlaubt, auch dann in den Korntank zu schauen, wenn sich die Vorrichtung in der Außerbetriebsstellung befindet, was bei vielen bekannten ausfahrbaren Korntankaufsätzen nicht möglich ist. In diesem Zusammenhang ist zu erwähnen, dass bei einem großen Öffnungswinkel der Wände Tageslicht in den Korntank fällt, was die Beurteilung der Qualität des Getreides erleichtert.

In den Zeichnungen ist ein nachfolgend näher beschriebenes Ausführungsbeispiel der Erfindung dargestellt. Es zeigt:
- Fig. 1: eine Erntemaschine mit einer erfindungsgemäßen Vorrichtung zur Vergrößerung des Volumens eines Behälters;
- Fig. 2: eine perspektivische Ansicht der Vorrichtung zur Vergrößerung des Volumens des Behälters in Betriebsstellung; und
- Fig. 3: eine perspektivische Ansicht der Vorrichtung zur Vergrößerung des Volumens des Behälters in Außerbetriebsstellung.

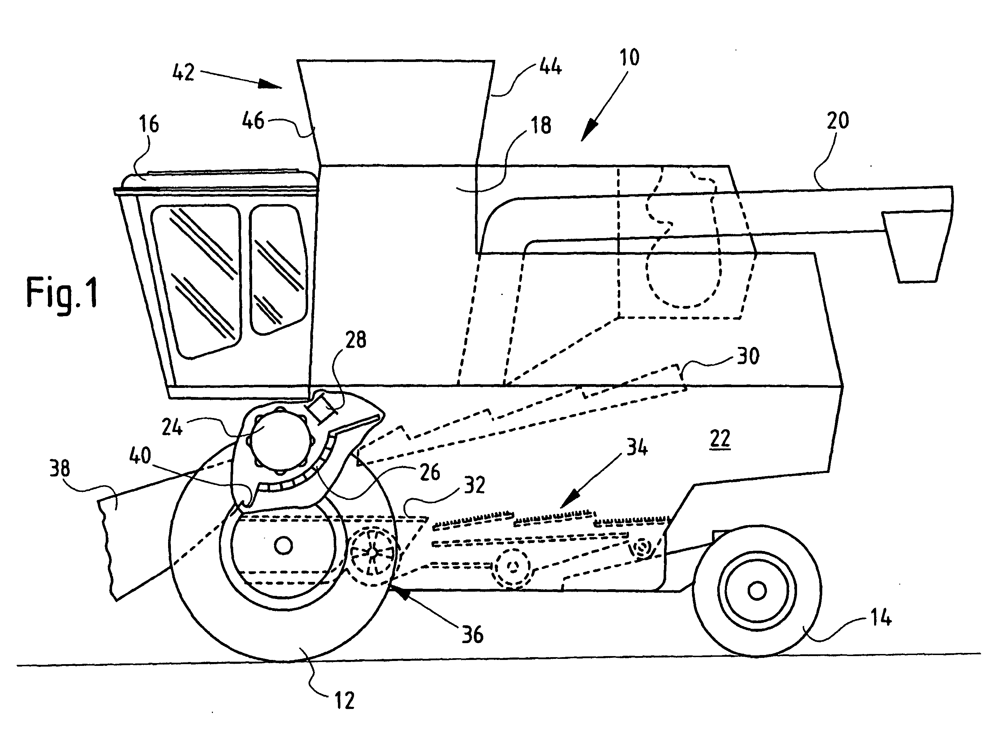

Eine in Figur 1 gezeigte Erntemaschine in der Form eines Mähdreschers 10 ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

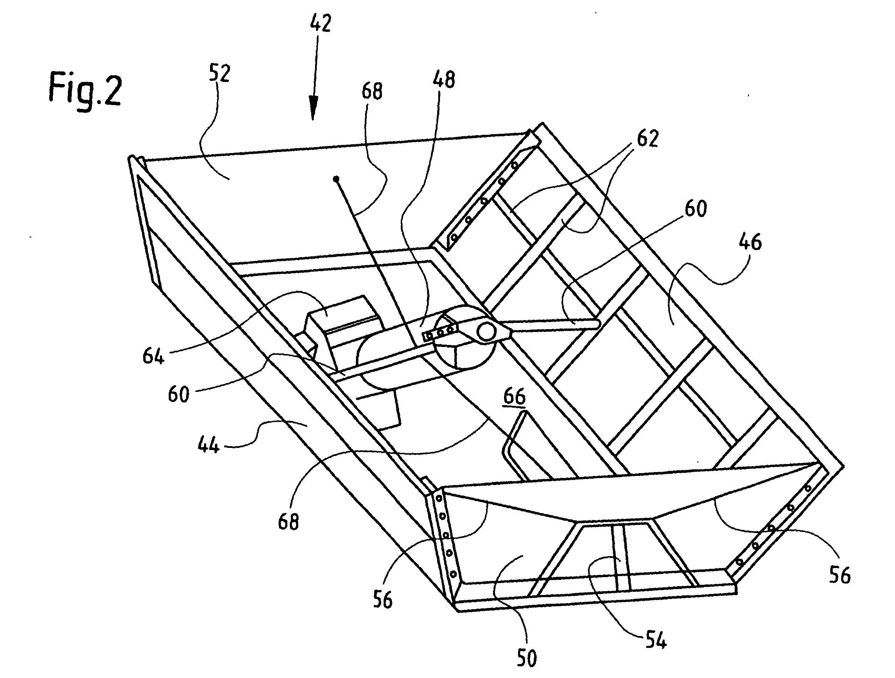

An der Oberseite des nach oben offenen Korntanks 18 ist eine Vorrichtung zur Erhöhung des Fassungsvermögens eines Behälters in Form eines Korntankaufsatzes 42 angebracht. In den Figuren 1 und 2 ist der Korntankaufsatz 42 in seiner Betriebsstellung dargestellt. Der Korntankaufsatz 42 umfasst eine in Vorwärtsfahrtrichtung des Mähdreschers 10 vordere Wand 46, die aus in sich starrem Material hergestellt ist, in der dargestellten Ausführungsform aus mit quer und längs verlaufenden Rippen 62 verstärktem Blech. Der Korntankaufsatz 42 weist außerdem eine hintere Wand 44 auf, die mit der vorderen Wand 46 identisch ist. Zu den beiden Seiten des Mähdreschers 10 hin ist der Korntankaufsatz 42 mit Seitenwänden 50 und 52 aus flexiblem Material versehen, z. B. gummiertem Gewebe. Die Seitenwände 50, 52 sind an ihren seitlichen Enden mit der vorderen Wand 46 und der hinteren Wand 44 und am unteren Rand mit der Wand des Korntanks 18 verbunden. Die vordere Wand 46 und die hintere Wand 44 sind an ihren Unterseiten um horizontale, quer zur Fahrtrichtung des Mähdreschers 10 verlaufende Achsen schwenkbar an den Wänden des Korntanks 18 befestigt.

Die vordere Wand 46, die hintere Wand 44 und die Seitenwände 50, 52 bilden in der Betriebsstellung somit einen trichterartigen, ringförmigen und nach oben offenen Behälter. Es wäre denkbar, eine obere Abdichtung aus flexiblem oder elastischem Material auf den Korntankaufsatz 42 aufzusetzen, um auch in der Betriebsstellung ein Eindringen von Regen in das Innere des Korntanks 18 zu unterbinden.

An den Außenflächen der Seitenwände 50, 52 aus flexiblem Material ist jeweils ein Stützelement 54 in Form eines nach unten geöffneten Bogens mit einer mittleren, senkrechten Querstrebe angeordnet (das der Seitenwand 52 zugeordnete Stützelement ist in Figur 2 nicht sichtbar), das in der Form eines aus Rohren zusammengefügten Rahmens aufgebaut ist. Die Stützelemente 54 stützen die Seitenwände 50 bzw. 52 nach außen ab und verhindern eine übermäßige Belastung der Seitenwände 50, 52. Die Stützelemente 54 sind durch an den Außenflächen der Seitenwände 50, 52 anliegende Seile 56 mit den oberen Ecken der vorderen Wand 46 und der hinteren Wand 44 verbunden. Die Seile 56 dienen ebenfalls zur Abstützung der Seitenwände 50, 52 und begrenzen den Schwenkweg der vorderen Wand 46, der hinteren Wand 44 und der Stützelemente 54. Die Stützelemente 54 sind an ihren unteren Enden um horizontale, parallel zur Fahrtrichtung des Mähdreschers 10 verlaufende Achsen schwenkbar an der Wand des Korntanks 18 angelenkt. Sie sind - zwecks Abstützung der Seitenwände 50, 52 - aber nur maximal um 90° nach oben, jedoch nicht weiter verschwenkbar. Die Länge der Seile 56 ist durch geeignete Verstellelemente einstellbar, so dass sie gleichmäßig gespannt sind.

Ein Befüllrohr 48 ist im Inneren des Korntanks 18 angeordnet und transportiert den ausgedroschenen Gutanteil von den Sieben 34 in den Korntank 18. Das Befüllrohr 48 ist durch eine Antriebseinrichtung 64, die einen Elektromotor umfasst, zwischen einer in Figur 2 gezeigten Betriebsstellung und einer Außerbetriebsstellung bewegbar, in der das Befüllrohr 48 nach unten in den Innenraum des Korntanks 18 hinein abgesenkt ist, bewegbar. In der Betriebsstellung ist die Auslassöffnung am oberen Ende des Befüllrohres innerhalb des von den Seitenwänden 44, 46, 50 und 52 des Korntankaufsatzes 42 gebildeten Rings angeordnet. Der Korntankaufsatz 42 kann somit bis zum oberen Rand mit Erntegut gefüllt werden.

Das Befüllrohr 48 ist durch jeweils ein stangenförmiges, Zug- und Druckkräfte übertragendes Verbindungselement 60 mit der vorderen Wand 46 und der hinteren Wand 44 verbunden. Das Verbindungselement ist durch geeignete Gelenke am Befüllrohr 48 und der jeweiligen Wand 44, 46 angelenkt. Wird das Befüllrohr 48 durch die Antriebseinrichtung 64 von der in Figur 2 dargestellten Betriebsposition in die Außerbetriebsposition verbracht, so bewirken die Verbindungselemente 60, dass die vordere Wand 46 und die hintere Wand 44 in Richtung auf das Innere des Korntanks 18 zu einschwenken. Durch die mit der vorderen Wand 46 bzw. hinteren Wand 44 verbundenen, sich nunmehr entspannenden Seile 56 werden die Stützelemente 54 nach innen geklappt, unterstützt durch Seile 68, die jeweils zwischen einer Seitenwand 50, 52 und dem Befüllrohr 68 gespannt sind. Dadurch werden die Seitenwände 50, 52 eingefaltet. Die Seile 68 sind mit den Stützelementen 54 verbunden und stützen sie und die Seitenwände 50, 52 in der Betriebsstellung ab, was sich insbesondere dann als sinnvoll erweist, wenn der Korntankaufsatz 42 befüllt ist. Die Seile 68 können derart an den Seitenwänden 50, 52 und den Stützelementen 54 angebracht sein, dass beim Einklappen in die Außerbetriebsstellung eine Relativbewegung zwischen Stützelementen 54 und Seitenwänden 50, 52 möglich ist.

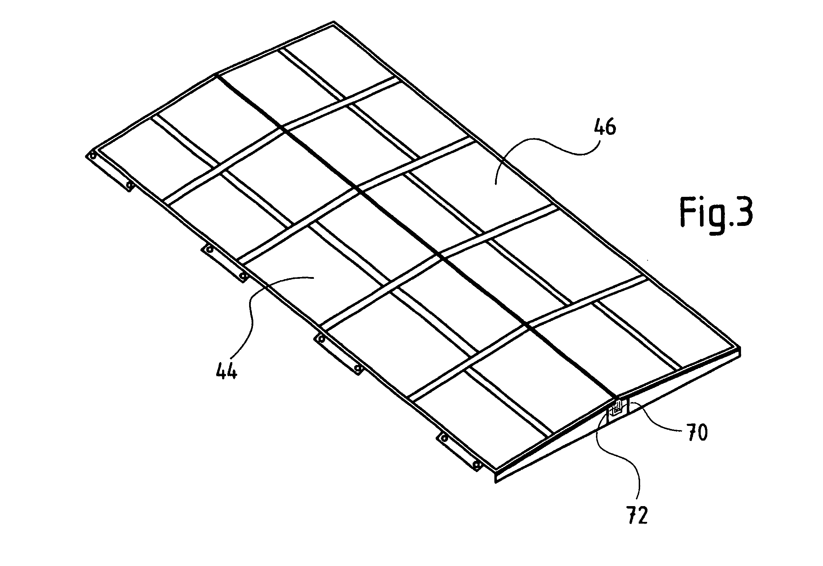

Die vordere Wand 46 und die hintere Wand 44 bilden in der Außerbetriebsstellung einen geschlossenen Deckel (s. Figur 3) für den Korntank 18, der ihn und die Seitenwände 50, 52 vor Umwelteinflüssen schützt. Anhand der Figur 3 ist erkennbar, dass die vordere Wand 46 in der Außerbetriebsstellung einen Teilbereich der hinteren Wand 44 überdeckt. An der äußeren Längsseite der hinteren Wand 44 ist eine nach unten gerichtete Kante 72 angeordnet, die in eine an der äußeren Längsseite der vorderen Wand 46 angebrachtes Winkelprofil 70 eingreift, das unterhalb der Kante 72 angeordnet ist. Dadurch erreicht man, dass der Korntank 18 vor Regen geschützt ist und nicht durch Wind geöffnet werden kann. Die vordere Wand 46 erreicht vor der hinteren Wand 44 die Außerbetriebsstellung, damit die Kante 72 in das Winkelprofil 70 gelangen kann.

Das Verbringen des Korntankaufsatzes 42 in die Betriebsstellung erfolgt analog. Das Befüllrohr 48 wird durch die Antriebseinrichtung 64 angehoben, so dass die Verbindungselemente 60 die vordere Wand 46 und die hintere Wand 44 um etwa 120° aufschwenken, bis die Seile 56 gespannt sind. Durch die sich spannenden Seile 56 werden die Stützelemente 54 etwa um 90° nach außen in die Betriebsposition verschwenkt. Die Seile 56 begrenzen auch den Schwenkweg der Stützelemente 54. Die Seitenwände 50, 52 sind durch geeignete Befestigungsmittel mit den Stützelementen 54 verbunden, so dass auch sie in die Betriebsstellung gelangen. Die vordere Wand 46 kann bei Ausfall der Antriebseinrichtung 64 von Hand angehoben werden, so dass durch die Verbindungselemente 60 auch das Befüllrohr 48 und die hintere Wand 44, sowie die Seitenwände 50, 52 in die Betriebsstellung gelangen.

An der vorderen Wand des Korntanks 18 ist ein Fenster 66 angeordnet (s. Figur 3), das einer in der Kabine 16 befindlichen Bedienungsperson einen Einblick ins Innere des Korntanks 18 ermöglicht. Da der Korntankaufsatz 42 sich auch in der Außerbetriebsstellung nicht ins Innere des Korntanks 18 erstreckt, ist stets ein einwandfreier Einblick in den Korntank 18 möglich.

## Patentansprüche

1. Vorrichtung zur Erhöhung des Fassungsvermögens eines Behälters, mit vier Wänden, die zwischen einer Betriebsstellung, in der sie einen geschlossenen Ring bilden, und einer Außerbetriebsstellung bewegbar sind, wobei zwei sich gegenüberliegende Wände (44, 46) schwenkbar sind und aus in sich starrem Material bestehen, **dadurch gekennzeichnet, dass** die zwei anderen Wände (50, 52) aus in sich flexiblem Material bestehen.

2. Vorrichtung nach Anspruch 1, **dadurch gekennzeichnet, dass** an der Außenfläche einer oder beiden der zwei Wände aus flexiblem Material (50, 52) ein einklappbares Stützelement (54) anliegt.

3. Vorrichtung nach Anspruch 2, **dadurch gekennzeichnet, dass** das oder die Stützelemente (54) durch einen Rahmen gebildet ist oder sind.

4. Vorrichtung nach einem der Ansprüche 1 bis 3, **gekennzeichnet durch** mindestens ein an der Außenseite wenigstens einer der zwei Wände (50, 52) aus flexiblem Material anliegendes Seil (56).

5. Vorrichtung nach Anspruch 4, **dadurch gekennzeichnet, dass** das Seil (56) zumindest in etwa diagonal über die Wand (50, 52) aus in sich flexiblem Material verläuft.

6. Vorrichtung nach Anspruch 5, **dadurch gekennzeichnet, dass** sich das Seil (56) zwischen einer äußeren Ecke einer Wand (44, 46) aus in sich starrem Material und dem unteren Rand der Wand (50, 52) aus in sich flexiblem Material oder dem Stützelement (54) angeordnet ist.

7. Vorrichtung nach einem der Ansprüche 4 bis 6, **dadurch gekennzeichnet, dass** die Länge des Seils (56) einstellbar ist.

8. Vorrichtung nach einem der vorhergehenden Ansprüche, **dadurch gekennzeichnet, dass** mindestens zwei der Wände (50, 52) trapezförmig sind, so dass die jeweils anderen Wände (44, 46) um einen 90° übersteigenden Winkel zwischen Außerbetriebsstellung und Betriebsstellung verschwenkbar sind.

9. Vorrichtung nach einem der vorhergehenden Ansprüche, **dadurch gekennzeichnet, dass** der Verschwenkwinkel einer oder mehrerer Wände (44, 46) durch mindestens ein Seil (56) und/oder einen Hebel begrenzt ist.

10. Vorrichtung nach einem der vorhergehenden Ansprüche, **dadurch gekennzeichnet, dass** die Wände (44, 46) aus in sich starrem Material und/oder das einklappbare Stützelement (54) durch einen Seilzug- und/oder Hebelmechanismus verschwenkbar sind, der vorzugsweise auch den Verschwenkwinkel einer oder mehrerer Wände (44, 46) und/oder des Stützelements (54) begrenzt.

11. Vorrichtung nach einem der vorhergehenden Ansprüche, **dadurch gekennzeichnet, dass** eine erste Wand (46) aus in sich starrem Material in der Außerbetriebsstellung einen Teilbereich der zweiten Wand (44) aus in sich starrem Material überdeckt.

12. Vorrichtung nach einem der vorhergehenden Ansprüche, **dadurch gekennzeichnet, dass** an der Innenseite wenigstens einer der Wände (44, 46) aus in sich starrem Material Trittstufen angebracht sind.

13. Vorrichtung nach einem der vorhergehenden Ansprüche, **dadurch gekennzeichnet, dass** das in sich flexible Material aus Gewebe, insbesondere gummiertem Industriegewebe, besteht.

14. Korntank (18) mit einer an seiner Oberseite angeordneten Vorrichtung nach einem der vorhergehenden Ansprüche als Korntankaufsatz (42).

15. Mähdrescher (10) mit einem Korntank (18) nach Anspruch 14.

16. Mähdrescher (10) nach Anspruch 15, **dadurch gekennzeichnet, dass** die Wände (44, 46) aus in sich starrem Material sich quer zur Fahrtrichtung erstrecken.

17. Mähdrescher (10) nach Anspruch 15 oder 16, **dadurch gekennzeichnet, dass** er mit einem durch eine Antriebseinrichtung (64) zwischen Außerbetriebsstellung und Betriebsstellung bewegbaren Befüllrohr (64) des Korntanks (18) ausgestattet ist, und das dass die Wände (44, 46) aus in sich starrem Material und gegebenenfalls das einklappbare Stützelement (54) durch die Antriebseinrichtung (64) zwischen Betriebsstellung und Außerbetriebsstellung verschwenkbar sind.

18. Mähdrescher (10) nach einem der Ansprüche 15 bis 17, **dadurch gekennzeichnet, dass** der Korntank (18) unterhalb des Korntankaufsatzes (42) mit einem Fenster (66) versehen ist, durch das aus einer Kabine (16) auch bei in der Außerbetriebsstellung befindlichem Korntankaufsatz (42) eine Einblickmöglichkeit in das Innere des Korntanks (18) gegeben ist.

## Claims

1. Apparatus for increasing the capacity of container, with four walls which can be moved between a working position, in which they form a closed ring, and a non-working position, wherein two opposite walls (44, 46) can pivot and consist of rigid material, **characterized in that** the other two walls (50, 52) consist of flexible material.

2. Apparatus according to claim 1, **characterized in that** a support element (54) which can fold in bears on the outer surface of one or both of the two walls of flexible material (50, 52).

3. Apparatus according to claim 2, **characterized in that** the support element or elements (54) is or are formed by a frame.

4. Apparatus according to any of claims 1 to 3, **characterized by** at least one cord (56) bearing on the outside of at least one of the two walls (50, 52) of flexible material.

5. Apparatus according to claim 4, **characterized in that** the cord (56) runs at least approximately diagonally across the wall (50, 52) of flexible material.

6. Apparatus according to claim 5, **characterized in that** the cord (56) is arranged between an outer comer of a wall (44, 46) of rigid material and the lower edge of the wall (50, 52) of flexible material or the support element (54).

7. Apparatus according to any of claims 4 to 6, **characterized in that** the length of the cord (56) can be adjusted.

8. Apparatus according to any of the preceding claims, **characterized in that** at least two of the walls (50, 52) are trapezoidal, so that the respective other walls (44, 46) can pivot through an angle exceeding 90E between the non-working position and the working position.

9. Apparatus according to any of the preceding claims, **characterized in that** the angle of swing of one or more walls (44, 46) is limited by at least one cord (56) and/or a lever.

10. Apparatus according to any of the preceding claims, **characterized in that** the walls (44, 46) of rigid material and/or the support element (54) which can fold in can be pivoted by a pull cord and/or lever mechanism, which preferably also limits the angle of swing of one or more walls (44, 46) and/or the support element (54).

11. Apparatus according to any of the preceding claims, **characterized in that** a first wall (46) of rigid material overlaps a partial region of the second wall (44) of rigid material in the non-working position.

12. Apparatus according to any of the preceding claims, **characterized in that** steps are provided in the inside of at least one of the walls (44, 46) of rigid material.

13. Apparatus according to any of the preceding claims, **characterized in that** the flexible material consists of a textile, especially a rubberised industrial textile.

14. A grain tank (18) with an apparatus according to any of the preceding claims arranged on its top as a grain tank attachment (42).

15. A combine harvester (10) with a grain tank (18) according to claim 14.

16. A combine harvester (10) according to claim 15, **characterized in that** the walls (44, 46) of rigid material extend transverse to the direction of travel.

17. A combine harvester (10) according to claim 15 or 16, **characterized in that** it is equipped with a filling pipe (64) of the grain tank (18) movable between an out of operation position and an operating position by a drive device (64) and **in that** the walls (44, 46) of rigid material and optionally the support element (54) which can fold in can be turned between the working position and the non-working position by the drive device (64).

18. A combine harvester (10) according to any of claims 15 to 17, **characterized in that** the grain tank (18) is provided below the grain tank attachment (42) with a window (66), through which a sight into the interior of the grain tank (18) from a cab (16) is provided even in the non-working position of the grain tank attachment (42)

## Revendications

1. Dispositif d'augmentation de la capacité d'un conteneur comportant quatre parois mobiles déplaçables entre une position active dans laquelle elles forment un anneau fermé et une position inactive, deux des parois opposées (44, 46) étant pivotantes et réalisées avec un matériau en soi rigide, **caractérisé en ce que** les deux autres parois (50, 52) sont réalisées avec un matériau en soi souple.

2. Dispositif conforme à la revendication 1, **caractérisé par** un élément -support repliable (54) appuyé à la surface extérieure de l'une ou des deux parois en matériau souple (50, 52).

3. Dispositif conforme à la revendication 2, **caractérisé en ce que** le ou les élément(s)-support est ou sont formés d'un cadre.

4. Dispositif conforme à l'une des revendi cations 1 à 3, **caractérisé par** au moins un câble (56) en matériau souple appuyé à la surface extérieure d'au moins une des deux parois (50, 52) en matériau souple.

5. Dispositif conforme à la revendication 4, **caractérisé en ce que** le câble (56) court au moins approximativement en diagonale le long de la paroi (50, 52) en matériau en soi souple.

6. Dispositif conforme à la revendication 5, **caractérisé en ce que** le câble (56) est disposé entre le coin extérieur d'une paroi (44, 46) en matériau en soi rigide et le bord inférieur de la paroi (50, 52) en matériau en soi souple ou l'élément -support (54).

7. Dispositif conforme à l'une des revendications 4 à 6, **caractérisé en ce que** la longueur du câble (56) est réglable.

8. Dispositif conforme à l'une des rêve ndications précédentes, **caractérisé en ce que** deux au moins des parois (50, 52) sont trapézoïdales, de sorte que les autres parois (44, 46) peuvent pivoter de la position active à la position inactive selon un angle de plus de 90°.

9. Dispositif conforme à l'une des revendications précédentes, **caractérisé en ce que** l'angle de pivotement de l'une ou de plusieurs des parois (44, 46) est limité par au moins un câble (56) et/ou un levier.

10. Dispositif conforme à l'une des revendications précédentes, caractér isé en ce que les parois (44, 46) en matériau en soi rigide et/ou l'élément -support repliable (54) pivotent au moyen d'un mécanisme de commande par câbles et/ou de levier qui limite également de préférence l'angle de pivotement de l'une ou de plusieurs parois (44, 46) et/ou de l'élément -support (54).

11. Dispositif conforme à l'une des revendications précédentes, **caractérisé en ce qu'**une première paroi (46) en matériau en soi rigide recouvre en position inactive une partie de la deuxième paroi (44) en maté riau en soi rigide.

12. Dispositif conforme à l'une des revendications précédentes, **caractérisé par** des marches disposées sur la face interne de l'une au moins des parois (44, 46) en matériau en soi rigide.

13. Dispositif conforme à l'une des revendicati ons précédentes, **caractérisé en ce que** le matériau en soi souple est un tissu, notamment un tissu industriel gommé.

14. Réservoir à grains (18) présentant un dispositif conforme à l'une des revendications précédentes monté sur son côté supérieur en tant q ue dispositif (42) d'augmentation de la capacité.

15. Moissonneuse-batteuse (10) avec réservoir à grains (18) conforme à la revendication 14.

16. Moissonneuse-batteuse (10) conforme à la revendication 15, **caractérisée en ce que** les parois (44, 46) en mat ériau en soi rigide se déploient perpendiculairement au sens de la marche.

17. Moissonneuse-batteuse (10) conforme à la revendication 15 ou 16, **caractérisée par** un tube de remplissage (64) du réservoir à grains (18) mobile au moyen d'un dispositif d'entraînement (64) entre la position inactive et la position active et en ce que les parois (44, 46) en matériau en soi rigide et, le cas échéant, l'élément - support repliable (54) peuvent pivoter au moyen du dispositif d'entraînement (64) entre position active et position inactive.

18. Moissonneuse-batteuse (10) conforme à l'une des revendications 15 à 17, **caractérisée en ce que** le réservoir à grains (18) possède, sous le dispositif (42), une fenêtre (66) permettant de voir l'intérieur du réservoir à grains (18) depuis une cabine (16), et ce également lorsque le dispositif (42) est en position inactive.
